# EUROPÄISCHE PATENTSCHRIFT

(11) **EP 0 358 894 B1**
(45) Veröffentlichungstag und Bekanntmachung des Hinweises auf die Patenterteilung: **18.11.1993**
(21) Anmeldenummer: 89113529.5
(22) Anmeldetag: 22.07.1989
(51) Int. Cl.: F16H 59/04, B60K 20/04, F16H 59/10

(54) **Vorrichtung zum Vorwählen und Schalten eines Kraftfahrzeug-Gangschaltgetriebes**
Device for preselection and gear change of a stepped vehicle transmission
Dispositif de présélection et de changement de vitesse pour une boîte de vitesses pour automobiles

(30) Priorität: 15.09.1988 DE 3831310
(43) Veröffentlichungstag der Anmeldung: 21.03.1990
(73) Patentinhaber: Dr.Ing.h.c. F. Porsche Aktiengesellschaft, 70435 Stuttgart (DE)
(72) Erfinder: Heizmann, Helmut, Dipl.-Ing.FH, D-7000 Stuttgart 1 (DE)

(56) Entgegenhaltungen:
- US-A- 4 156 474
- US-A- 4 625 842
- PATENT ABSTRACTS OF JAPAN vol. 1, no. 25 () 26 März 1977,& JP-A-51 141957 (TOYOTA) 07 Dezember 1976,

## Beschreibung

Die Erfindung betrifft eine Vorrichtung zum Vorwählen und Schalten eines Kraftfahrzeug-Gangschaltgetriebes nach dem Oberbegriff des Anspruchs 1.

Eine ähnliche Gangschaltvorrichtung ist in DE-OS 27 43 875 beschrieben. Der Schalthebel ist an einem Gelenkviereck geführt, das aus zwei zueinander parallelen Schwingen und einem die Koppel bildenden Schalthebelgehäuse zusammengesetzt ist. Im Schalthebelgehäuse ist der Schalthebel mittels eines Kugelgelenkes schwenkbar gelagert. Durch eine spezielle Anordnung der Gelenkachsen und Abstimmung der Achsabstände, soll erreicht werden, daß Schwingbewegungen des Getriebes nicht auf entsprechende Bewegungen am Schalthebel übertragen werden. Insbesondere sollen keine vorwärtsgerichteten, rückwärtsgerichteten oder vertikalgerichteten Bewegungen des durch den Fahrer zu betätigenden Knopfes des Schalthebels auftreten, um den Fahrer nicht zu irritieren und den Knopf in Ruhe zu halten.

Es ist die Aufgabe der Erfindung, eine gattungsgemäße Schaltvorrichtung so zu gestalten, daß sie wenig Bauraum erfordert und mit wenigen Bauteilen herstellbar ist.

Eine Lösung dieser Aufgabe gelingt mit den kennzeichnenden Merkmalen des Anspruchs 1. Wenn ein Querstück des Schalthebels die Koppel des Gelenkvierecks darstellt oder mit ihr starr verbunden ist, läßt sich durch entsprechende Bemessung der Längen und Abstände der Anlenkstellen der Schwingen eine angenäherte Geradführung des Schalthebelgriffstücks und der am Schalthebel angebrachten Schaltstange erzielen. Als Querstück des Schalthebels dient nach einer bevorzugten Ausführungsform der Erfindung ein in beidseitigen Augen befestigter und aus ihnen vorstehender Gelenkzapfen. An ihm sind links und rechts Gelenkteile gelagert, an denen die Schwingen angelenkt sind. Wird der Schalthebel um den Gelenkzapfen verschwenkt, so wird die Schaltstange zum Vorwählen der Getriebegänge um ihre Längsachse gedreht.

Zwei Ausführungsbeispiele der Erfindung sind in der Zeichnung dargestellt und werden nachfolgend erläutert.

Es zeigen:
- Fig. 1: Gangschaltvorrichtung mit Darstellung dreier Schaltstellungen,
- Fig. 2: Schnitt nach Linie II-II der Fig. 1 mit Darstellung dreier Vorwählstellungen,
- Fig. 3: Gangschaltvorrichtung mit Kugelgelenken,
- Fig. 4: Seitenansicht der Fig. 3.

Ein Schalthebel 1 eines Kraftfahrzeug-Gangschaltgetriebes 2 ist an seinem oberen Ende mit einem vom Fahrer zu bedienenden Griffstück 3 versehen. An seinem unteren Ende ist der Schalthebel 1 über ein Gelenkstück 4 mit einer in das Gangschaltgetriebe 2 eingreifenden Schaltstange 5 verbunden. Das Gelenkstück 4 wird gebildet durch zwei U-förmige, den Schalthebel umgreifende Laschen 6 und 7, die an der Schaltstange 5 über einen Gelenkstift 8 angelenkt sind und einem zum Gelenkstift 8 senkrechten nach unten stehenden Zapfen 9, mit dem die Schaltstange 5 drehbar verbunden ist.

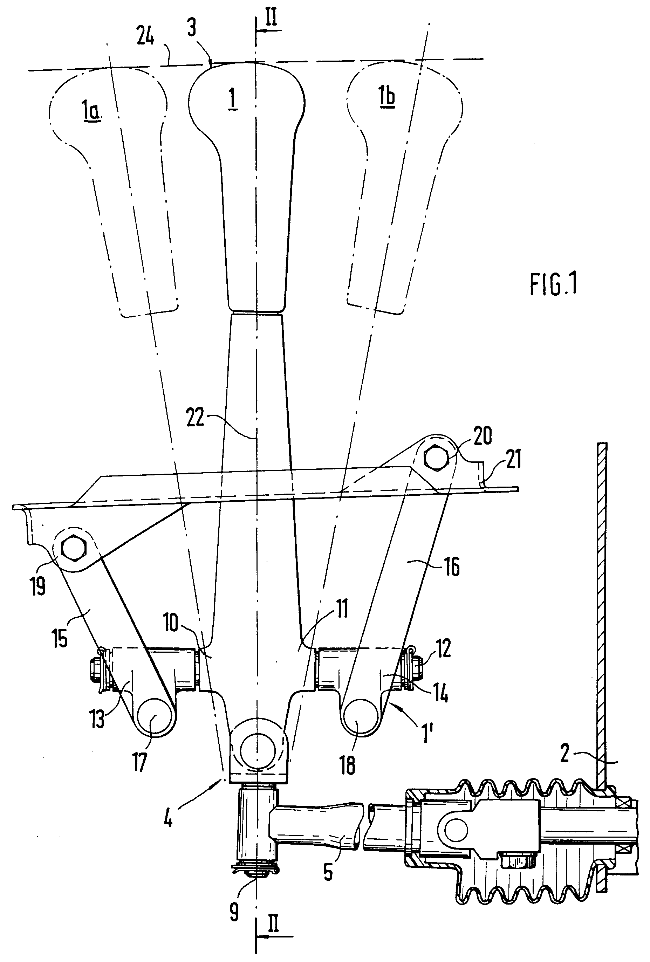

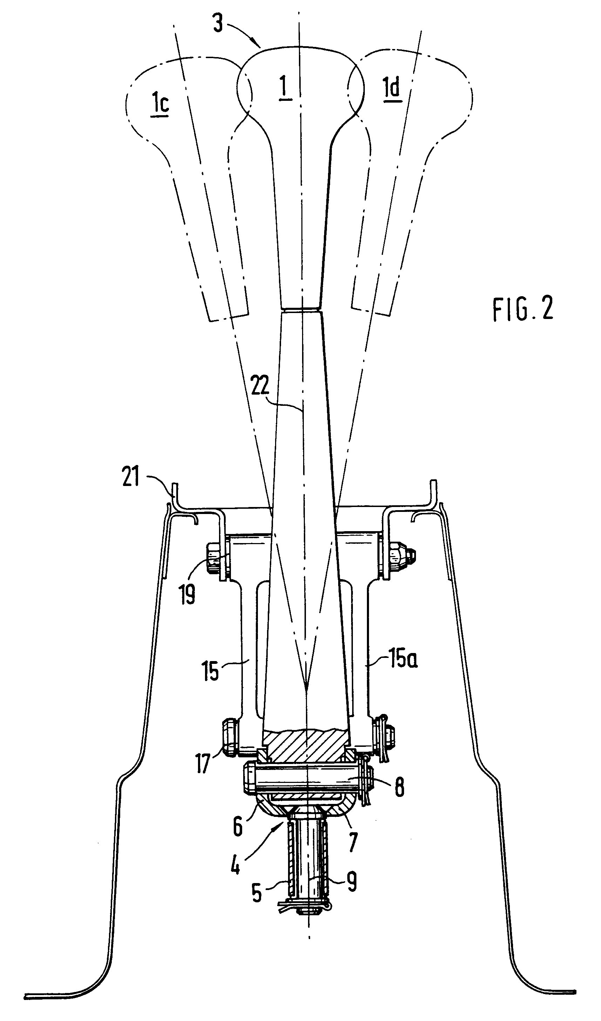

Unmittelbar oberhalb des Gelenkstücks 4 ist an dem Schalthebel 1 ein Querstück 1′ angebracht, das die Koppel des Gelenkvierecks bildet. In einer ersten Ausführungsform der Erfindung nach Fig. 1 und Fig. 2 besteht das Querstück 1′ des Schalthebels 1 aus beidseitigen Augen 10, 11, in deren Bohrungen ein Gelenkzapfen 12 befestigt ist. Auf den aus den Augen 10, 11 herausragenden Enden des Gelenkzapfens 12 sind Gelenkteile 13, 14 aufgesteckt und durch Splinte axial gesichert. Am linken Gelenkteil 13 ist eine kürzere Schwinge 15, am rechten Gelenkteil 14 eine längere Schwinge 16 mit den Stiften 17 bzw. 18 angelenkt. An den anderen Enden sind die beiden Schwingen 15 und 16 in Festlagerstellen 19, 20 eines Rahmenteils 21 des Kraftfahrzeugs mit Schraubstiften so angelenkt, daß die Längsmittellinien der Schwingen einen spitzen Winkel zueinander bilden und daß sie sich nahe der Längsmittelachse 22 des Schalthebels 1 schneiden.

Die beiden Schwingen 15, 16, die Festlagerstellen 19, 20 und die beiden Gelenkteile 13, 14 mit den Stiften 17, 18 bilden ein Gelenkviereck, dessen Koppel die Augen 10, 11 des Schalthebels 1 und der in ihnen befestigte Gelenkzapfen 12 darstellen. Wie Fig. 2 zeigt, ist das Gelenkviereck der besseren Lagerstabilität wegen zu einem räumlichen Gelenkviereck ergänzt, indem parallel zur kürzeren Schwinge 15 eine weitere kürzere Schwinge 15a an der Festlagerstelle 19 angelenkt ist; das gleiche gilt für die längere Schwinge 16. Das Rahmenteil 21 kann am Chassis 23 verschieblich angeschraubt sein, um die Grundstellung des Schalthebels 1 gegenüber der Schaltstange 5 verändern zu können.

Beim Schalten der einzelnen Getriebegänge bewegt sich der Schalthebel 1 entweder in die linke Schaltstellung 1a oder rechte Schaltstellung 1b. Das Gelenkviereck ist so dimensioniert, daß der höchste Punkt des Griffstücks 3 sich dabei auf einer angenäherten Geraden 24 bewegt.

Wird der Schalthebel nach Fig. 2 um die Mittelachse des Gelenkzapfen 12 in die Wählstellung 1c oder 1d verschwenkt, so wird die Schaltstange gedreht und die gewünschte Schaltgasse angewählt.

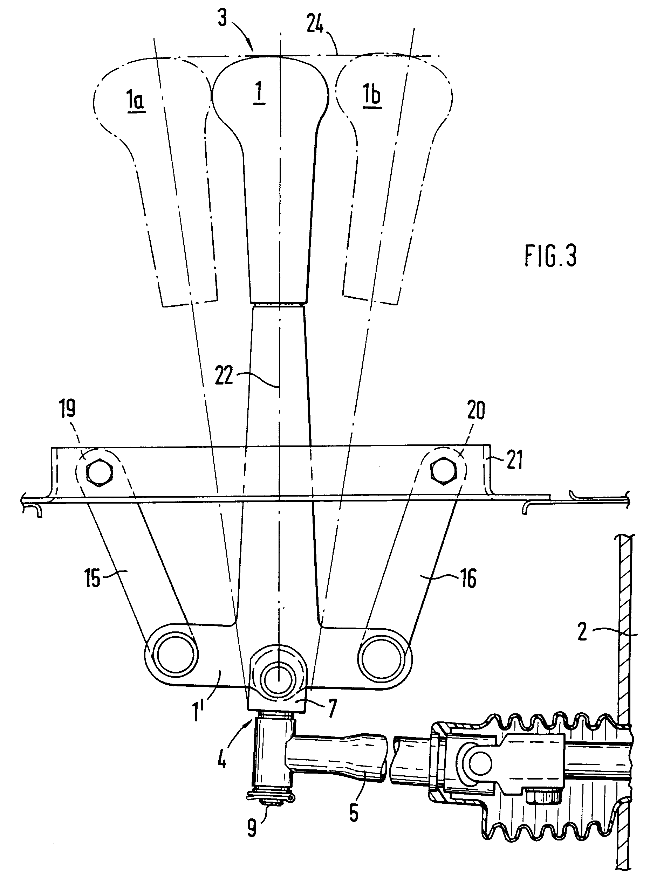

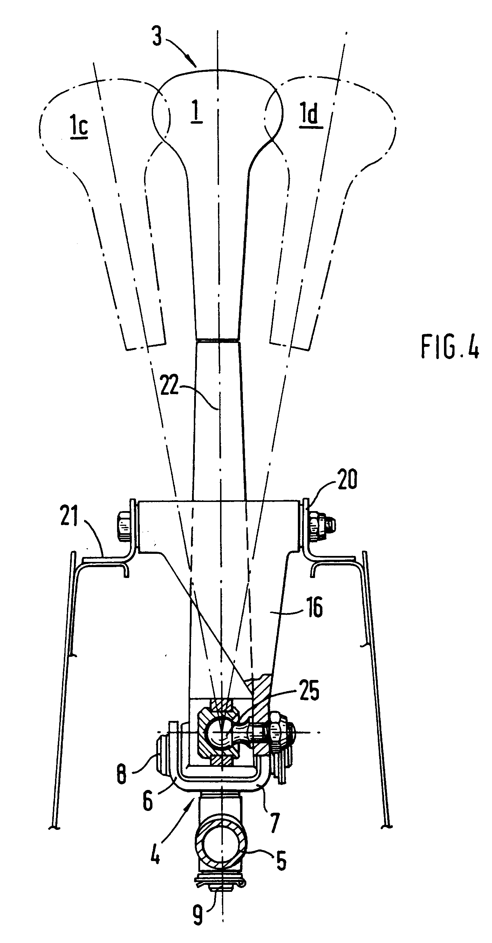

Wie Fig. 3 und Fig. 4 zeigen, kann in einer anderen Ausführungsform der Erfindung anstelle der Gelenkteile 13, 14 ein Kugelgelenk 25 treten. Hierzu müssen die Schwingen 15, 16 so angeordnet und ihre Längen so gewählt werden, daß die Schwenkachse des Schalthebels zum Vorwählen der Getriebegänge auf den Anlenkachsen der Schwingen 15, 16 am Schalthebel 1 liegt. Die linke Schwinge 15 und rechte Schwinge 16 haben hier gleiche Länge. Eine ausreichende Lagerstabilität läßt sich schon durch zwei Schwingen 15, 16 erreichen. An ihrem oberen Ende sind die Schwingen 15, 16 an Festlagerstellen 19, 20 des Rahmenteils 21 drehbar, unten sind sie mit Kugelgelenken 25 an das am Schalthebel 1 angeformte Querstück 1′ angelenkt. Unterhalb der Kugelgelenke 25 ist auch hier ein Gelenkstück 4 mit dem Schalthebel 1 drehbar verbunden, über das die Bewegungen des Schalthebels auf die Schaltstange 5 übertragen werden. Die Übersetzung der Schalt- und Vorwählwege der Schaltstange 5 zu den Schwenkbewegungen des Schalthebels kann durch Wahl der Anlenkstellen des Gelenkvierecks und durch Längenbemessung seiner Schwingen 15, 16 festgelegt werden. Anstelle der in Fig. 1 und Fig. 3 gezeigten Geraden 24 kann der oberste Punkt des Griffstücks bei anderer Gestaltung des Gelenkvierecks eine beliebige gekrümmte Kurve ausführen, wenn bei einem solchen Bewegungsverlauf der Schalthebel für den Fahrer des Kraftfahrzeugs besser zu handhaben ist.

## Patentansprüche

1. Vorrichtung zum Vorwählen und Schalten eines Kraftfahrzeug-Gangschaltgetriebes (2), mit einem Schalthebel (1), der an seinem oberen Ende mit einem Griffstück (3) versehen ist und im Bereich des unteren Endes durch ein Gelenkviereck (4) geführt ist, das aus mindestens zwei an dem Fahrzeugrahmen verschwenkbar gelagerten Schwingen (15,16), und einer sie gelenkig verbindenden Koppel besteht, wobei am unteren Ende des Schalthebels (1) eine in das Gangschaltgetriebe (2) eingreifende Schaltstange (5) angelenkt ist, dadurch gekennzeichnet, daß ein Querstück (1′) des Schalthebels (1) die Koppel des Gelenkvierecks bildet und daß an seinen beiden Seiten die Schwingen (15, 16) angelenkt sind.

2. Vorrichtung nach Anspruch 1, dadurch gekennzeichnet, daß die Schwingen (15, 16) spitzwinkelig zueinander verlaufen und daß sich ihre Längsmittellinien nahe der Längsmittellinie (22) des Schalthebels (1) schneiden.

3. Vorrichtung nach Anspruch 1 oder 2, dadurch gekennzeichnet, daß zu beiden Längsseiten des Schalthebels (1) zwei zueinander parallele linke Schwingen (15, 15a) und rechte Schwingen (16, 16a) angelenkt sind.

4. Vorrichtung nach Anspruch 1 und 2, dadurch gekennzeichnet, daß die Schwingen (15, 16) an ein linkes Gelenkteil (13) und ein rechtes Gelenkteil (14) angelenkt sind, und daß die Gelenkteile (13, 14) über einen durchgehenden Gelenkzapfen (12) drehbar mit dem Schalthebel (1) verbunden sind.

5. Vorrichtung nach Anspruch 1 und 2, dadurch gekennzeichnet, daß die beiden Schwingen (15, 16) am Schalthebel (1) jeweils mit einem Kugelgelenk (25) angelenkt sind.

6. Vorrichtung nach einem der Ansprüche 1 bis 5, dadurch gekennzeichnet, daß an dem Schalthebel (1) unterhalb der Anlenkstellen der Schwingen (15, 16) ein Gelenkstück (4) angelenkt ist, an dem die zum Gangschaltgetriebe (2) führende Schaltstange (5) drehbar befestigt ist.

7. Vorrichtung nach Anspruch 1, dadurch gekennzeichnet, daß die Anlenkstelle (19, 20) der Schwingen (15, 16) am Rahmen (23) des Kraftfahrzeugs diesem gegenüber einstellbar befestigt ist.

## Claims

1. A device for the preselection and gear shift of a motor vehicle gear shift mechanism (2), with a gearstick (1), which is provided at its upper end with a handle element (3) and is guided in the region of its lower end by a four-bar linkage (4). which is formed by at least two rocker arms (15, 16) pivotally mounted on the vehicle chassis and a coupling articulatedly connecting the rocker arms, a shift rod (5) engaging in the gear shift mechanism (2) being articulately connected to the lower end of the gearstick (1), characterised in that a crosspiece (1') of the gearstick (1) forms the coupling of the four-bar linkage, and the rocker arms (15, 16) are articulatedly connected on either side of the crosspiece (1').

2. A device according to claim 1 characterised in that the rocker arms (15, 16) extend toward one another at an acute angle and their longitudinal centre lines intersect in the vicinity of the longitudinal centre line (22) of the gearstick (1)

3. A device according to claim 1 or 2, characterised in that two parallel left rocker arms (15, 15a) and two parallel right rocker arms (16, 16a) are articulately connected on either longitudinal side of the gearstick (1).

4. A device according to claims 1 and 2, characterised in that the rockers arms (15, 16) are articulately connected to a left hinge part (13) and a right hinge part (14), and the hinge parts (13, 14) are pivotably connected to the gearstick (1) via a continuous hinge pin (12).

5. A device according to claims 1 and 2, characterised in that the two rocker arms (15, 16) are each articulately connected to the gearstick (1) via a ball-and-socket joint (25).

6. A device according to one of claims 1 to 5, characterised in that a hinge element (4), to which the shift rod (5) leading to the gear shift mechanism (2) is pivotably secured, is articulatedly connected to the gearstick (1) below the articulation sites of the rocker arms (15, 16).

7. A device according to claim 1, characterised in that the articulation site (19, 20) of the rocker arms (15, 16) is secured to the chassis (2) of the motor vehicle so as to be adjustable relative to the said chassis.

## Revendications

1. Dispositif de présélection et de changement de vitesse pour une boîte de vitesses (2) d'un véhicule automobile comportant un levier de manoeuvre (1), qui à son extrémité supérieure est pourvu d'une poignée (3) et qui dans la zone de l'extrémité inférieure est guidé par un carré d'articulation (4), qui est constitué d'au moins deux bras oscillants (15, 16) montés pivotants sur le châssis du véhicule et d'une bielle les reliant de manière articulée, une tige de manoeuvre (5), s'engageant dans la boîte de vitesses (2), étant articulée à l'extrémité inférieure du levier de manoeuvre (1) caractérisé en ce qu'une pièce transversale (1') du levier de manoeuvre (1) forme la bielle du carré d'articulation et en ce que sur ses deux côtés s'articulent les bras oscillants (15, 16).

2. Dispositif selon la revendication 1, caractérisé en ce que les bras oscillants (15, 16) s'étendent l'un vers l'autre en formant un angle aigu et en ce que leurs lignes médianes longitudinales se coupent à proximité de la ligne médiane longitudinale (22) du levier de manoeuvre (1).

3. Dispositif selon les revendications 1 ou 2, caractérisé en ce que sur les deux côtés longitudinaux du levier de manoeuvre (1) s'articulent deux bras oscillants (15, 15a) gauches et bras oscillants droits (16, 16a) parallèles entre eux.

4. Dispositif selon les revendications 1 et 2, caractérisé en ce que les bras oscillants (15, 16) s'articulent sur une partie d'articulation gauche (13) et une partie d'articulation droite (14) et en ce que les parties d'articulation (13, 14) sont reliées par un pivot d'articulation (12) traversant, de manière à pouvoir tourner avec le levier de manoeuvre (1)

5. Dispositif selon les revendications 1 et 2, caractérisé en ce que les deux bras oscillants (15, 16) s'articulent sur le levier de manoeuvre (1), chacun avec un joint sphérique (22).

6. Dispositif selon l'une des revendications 1 à 5, caractérisé en ce que sur le levier de manoeuvre (1) , au-dessous des points d'articulation des bras oscillants (15, 16), s'articule une pièce d'articulation (4) sur laquelle est fixée tournante la tige de manoeuvre (5) menant à la boîte de vitesses (2).

7. Dispositif selon la revendication 1, caractérisé en ce que le point d'articulation (19, 20) des bras oscillants (15, 16) sur le châssis (23) du véhicule est fixé de manière réglable par rapport à celui-ci.
